(19) Europäisches Patentamt
European Patent Office
Office européen des brevets

(11) **EP 4 131 472 B1**

(12) **EUROPEAN PATENT SPECIFICATION**

(45) Date of publication and mention
of the grant of the patent:
**22.05.2024 Bulletin 2024/21**

(21) Application number: **21935328.1**

(22) Date of filing: **06.12.2021**

(51) International Patent Classification (IPC):
$H01M\ 4/131^{\ (2010.01)}$       $H01M\ 4/136^{\ (2010.01)}$
$H01M\ 10/42^{\ (2006.01)}$       $H01M\ 4/62^{\ (2006.01)}$
$H01M\ 10/052^{\ (2010.01)}$      $H01M\ 4/02^{\ (2006.01)}$

(52) Cooperative Patent Classification (CPC):
**H01M 4/366; H01M 4/131; H01M 4/136;
H01M 4/525; H01M 4/5825; H01M 4/622;
H01M 4/623; H01M 4/624; H01M 4/625;
H01M 4/626; H01M 10/0525; H01M 10/4235;**
H01M 2004/028; Y02E 60/10

(86) International application number:
**PCT/KR2021/018353**

(87) International publication number:
**WO 2022/211215 (06.10.2022 Gazette 2022/40)**

(54) **CATHODE FOR LITHIUM SECONDARY BATTERY, AND LITHIUM SECONDARY BATTERY**

KATHODE FÜR LITHIUMSEKUNDÄRBATTERIE UND LITHIUMSEKUNDÄRBATTERIE

CATHODE POUR BATTERIE SECONDAIRE AU LITHIUM ET BATTERIE SECONDAIRE AU LITHIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.04.2021 KR 20210043090**

(43) Date of publication of application:
**08.02.2023 Bulletin 2023/06**

(73) Proprietor: **LG Energy Solution, Ltd.
Seoul 07335 (KR)**

(72) Inventors:
• **JEON, Sung Wook
Daejeon 34122 (KR)**
• **LEE, Kyung Min
Daejeon 34122 (KR)**
• **LEE, Hye Youn
Daejeon 34122 (KR)**
• **LEE, Su Rim
Daejeon 34122 (KR)**

(74) Representative: **Plasseraud IP
66, rue de la Chaussée d'Antin
75440 Paris Cedex 09 (FR)**

(56) References cited:
**CN-A- 112 072 068      JP-A- H1 173 947
JP-A- 2019 153 557      KR-A- 20080 015 162
KR-A- 20130 013 524     US-A1- 2016 172 680
US-A1- 2021 057 733**

**Description**

[Technical Field]

The present invention relates to a positive electrode for a lithium secondary battery and a lithium secondary battery, and more particularly, to a positive electrode for a lithium secondary battery and a lithium secondary battery having improved safety without deterioration of the lifespan characteristics of the battery.

The present application claims the benefit of priority based on Korean Patent Application No. 10-2021-0043090 dated April 2, 2021.

[Background Art]

As technology development and demand for mobile devices increase, the demand for secondary batteries as an energy source is rapidly increasing. Among these secondary batteries, a lithium secondary battery having high energy density and operating potential, a long cycle life, and a low self-discharge rate has been commercialized and widely used.

Recently, as lithium secondary batteries are used as power sources for medium and large devices such as electric vehicles, high capacity, high energy density, and low cost of lithium secondary batteries are further required, and accordingly, studies have been actively conducted to use inexpensive Ni, Mn, Fe and the like in place of expensive Co.

One of the main research tasks of the lithium secondary battery is to improve the safety of the battery using the high-capacity and high-output electrode active material while implementing the same. A lithium transition metal composite oxide is used as a positive electrode active material for a lithium secondary battery, and among them, a lithium cobalt composite metal oxide of $LiCoO_2$ having a high operating voltage and excellent capacity characteristics is mainly used. However, $LiCoO_2$ has very poor thermal properties due to the destabilization of the crystal structure due to delithiation, and when an internal short circuit occurs due to external pressure in the charged state, the positive electrode active material itself is decomposed, which may cause rupture and ignition of the battery. In addition, when an overcurrent instantaneously flows, there is a problem in that safety problems such as ignition or explosion occur due to this.

Accordingly, Korean Patent Publication No. 2019-0047203 discloses a technology for securing battery safety by interposing an overcharge prevention layer between a positive electrode current collector and a positive electrode active material layer to increase resistance during overcharge to block charging current. However, the electrode having the overcharge prevention layer as described above has improved safety, but has low adhesion due to the difference in composition between the overcharge protection layer and the positive electrode active material layer, so interlayer cracks may occur, thereby reducing the lifespan characteristics of the battery. In addition, the electrode has low penetration resistance, which may cause a problem in terms of safety when being penetrated by nails.

Therefore, when a metal body such as a nail penetrates the electrode from the outside, there is a need to develop a technique that not only has high safety so as not to cause heat generation, ignition, or the like due to an overcurrent, but also can improve deterioration of the life characteristics of a battery due to cracks occurring between layers of a positive electrode.

[Disclosure]

[Technical Problem]

Accordingly, an object of the present invention is to provide a positive electrode for a secondary battery and a lithium secondary battery that, when a metal body such as a nail penetrates the electrode from the outside, not only has high safety so as not to cause heat generation, ignition, or the like due to an overcurrent, but also can improve deterioration of the life characteristics of a battery due to cracks occurring between layers of a positive electrode.

[Technical Solution]

In order to solve the above-mentioned problem, in one embodiment the present invention provides a positive electrode for the lithium secondary battery including:

    a current collector;
    a first coating layer disposed on one or both surfaces of the current collector and containing a first positive electrode active material;
    a patterned layer disposed on the first coating layer and having a binder and a conductive material dispersed in the binder; and

a second coating layer disposed on the first coating layer on which the patterned layer is disposed, and containing a second positive electrode active material, and

wherein an area of the first coating layer on which the patterned layer is disposed is 30% to 80% of a total area of the first coating layer.

At this time, the patterned layer may have a dot, mesh, stripe or dendritric surface structure.

In addition, the first coating layer and the second coating layer each include 1 to 10 parts by weight of a binder based on 100 parts by weight of the first coating layer and the second coating layer, respectively, and the binder in each coating layer may include at least one resin selected from the group consisting of a polyvinylidene fluoride-hexafluoropropylene copolymer (PVDF-co-HFP), polyvinylidene fluoride, polyacrylonitrile, polymethyl methacrylate and copolymers thereof.

In addition, the binder of the patterned layer may include at least one resin selected from the group consisting of a polyvinylidene fluoride-hexafluoropropylene copolymer (PVDF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluororubber, and copolymers thereof.

In addition, the conductive material of the patterned layer may include at least one selected from the group consisting of graphite including natural graphite or artificial graphite; carbon black including acetylene black, ketjen black, channel black, furnace black, lamp black, or thermal black; conductive fibers including carbon fibers or metal fibers; carbon nanotubes; metal powders including fluorocarbon, aluminum or nickel; zinc oxide; potassium titanate; titanium oxide; and polyphenylene derivatives.

In addition, the conductive material of the patterned layer may be included in an amount of 1 to 50 parts by weight based on 100 parts by weight of the binder.

In addition, the average height of the patterned layer may be 0.5 $\mu$m to 50 $\mu$m based on the cross-section, and the average thickness of the first coating layer may be 0.1 $\mu$m to 10 $\mu$m.

In addition, the second coating layer may satisfy Equation 1:

$$[\text{Equation 1}]$$

$$6 \leq SD/PD \leq 100$$

wherein,

SD represents the average thickness of the second coating layer, and
PD represents the average thickness of the patterned layer.

In addition, the first positive electrode active material may include a lithium iron phosphate compound represented by the following Chemical Formula 1:

[Chemical Formula 1] $\quad Li_{1+a}Fe_{1-b}M^1_b(PO_{4-c})X_c$

wherein,

$M^1$ is at least one selected from the group consisting of Al, Mg and Ti,
X is at least one selected from the group consisting of F, S and N, and
a, b and c are $-0.5 \leq a \leq +0.5$, $0 \leq b \leq 0.5$, $0 \leq c \leq 0.1$, respectively.

Furthermore, the second positive electrode active material may include a lithium metal composite oxide represented by the following Chemical Formula (2):

[Chemical Formula 2] $\quad LiCo_{1-q}M^2_qO_2$

wherein,

$M^2$ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
q is $0 \leq q \leq 0.4$.

Further, in one embodiment, the present invention provides a lithium secondary battery having the positive electrode according to the present invention.

[Advantageous Effects]

The positive electrode for a lithium secondary battery according to the present invention sequentially includes a first coating layer and a second coating layer on a current collector, and by introducing a pattern layer in a form in which the conductive material is dispersed in the binder between the first coating layer and the second coating layer at a specific area ratio, the safety of the battery is improved, and therefore, when a metal body penetrates the electrode from the outside, not only heat generation due to an overcurrent, ignition, and the like cannot occur, but also the adhesive force between layers constituting the positive electrode can be improved, so that the life characteristics of the batteries can be improved.

[Brief Description of the Drawings]

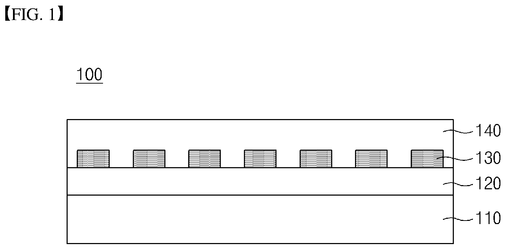

FIG. 1 is a cross-sectional view showing the structure of a positive electrode for a lithium secondary battery according to the present invention.

[Detailed Description of the Preferred Embodiments]

Since the present invention can have various changes and can have various embodiments, specific embodiments will be described in detail in the detailed description.

In the present invention, it is to be understood that the terms "include(s)" or "have(has)" and the like are intended to specify the presence of stated features, numbers, steps, operations, components or combinations thereof, but do not preclude the presence or addition of one or more other features or numbers, steps, operations, components and combinations thereof.

Further, in the present invention, when a portion of a layer, film, region, plate, etc. is described as being "on" another portion, it includes not only the case where the other portion is "directly on" but also the case where there is another portion therebetween. Conversely, where a portion of a layer, film, region, plate, etc. is described as being "under" another portion, this includes the case where there is another portion therebetween as well as "directly under" the other portion. Also, what is referred to herein as being disposed "on" may include being disposed not only on top but also on the bottom.

Hereinafter, the present invention will be described in more detail.

## Positive electrode for lithium secondary battery

In one embodiment, the present invention provides a positive electrode for the lithium secondary battery includes the following:

a current collector;
a first coating layer disposed on one or both surfaces of the current collector and containing a first positive electrode active material;
a patterned layer disposed on the first coating layer and having a conductive material dispersed in a binder; and
a second coating layer disposed on the first coating layer on which the patterned layer is disposed, and containing a second positive electrode active material, and
the area of the region in which the patterned layer is disposed is 30% to 80% of the total area of the first coating layer.

FIG. 1 is a cross-sectional view showing the structure of a positive electrode 100 for a lithium secondary battery according to the present invention, as shown in FIG. 1, the positive electrode 100 for a lithium secondary battery according to the present invention has the structure in which the current collector 110, the first coating layer 120 and the second coating layer 140 are sequentially stacked, and the patterned layer 130 is introduced between the first coating layer 120 and the second coating layer 140.

At this time, the patterned layer 130 is interposed between the first coating layer 120 and the second coating layer 140 to improve the adhesion between the first coating layer 120 and the second coating layer 140, while being capable of serving to increase the electrical conductivity of the positive electrode 100.

To this end, the patterned layer 130 has a form in which a conductive material is dispersed in a binder, wherein the binder may further include additives such as a dispersant and a surfactant in addition to the conductive material, but does not include a positive electrode active material exhibiting electrical activity.

The binder included in the patterned layer 130 may be the same as or different from the binder included in the first coating layer 120 and the second coating layer 140. For example, a binder that may be included in the patterned layer 130 may include at least one resin selected from the group consisting of a polyvinylidene fluoride-hexafluoropropylene copolymer (PVDF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluororubber, and copolymers thereof. As an example, the binder may include a polyvinylidene fluoride-hexafluoropropylene copolymer.

In addition, the conductive material that may be included in the patterned layer 130 may include at least one selected from the group consisting of graphite including natural graphite or artificial graphite; carbon black including acetylene black, ketjen black, channel black, furnace black, lamp black, or thermal black; conductive fibers including carbon fibers or metal fibers; carbon nanotubes; metal powders including fluorocarbon, aluminum or nickel; zinc oxide; potassium titanate; titanium oxide; and polyphenylene derivatives. As an example, the conductive material may include at least one of carbon black including acetylene black, ketjen black, channel black, furnace black, lamp black, and thermal black.

In addition, the conductive material may be included in an amount of 1 to 50 parts by weight, specifically, 5 to 40 parts by weight; 10 to 20 parts by weight; 20 to 40 parts by weight; 30 to 50 parts by weight; 15 to 35 parts by weight; or 15 to 25 parts by weight, based on 100 parts by weight of the binder.

In the present invention, by controlling the content of the conductive material included in the patterned layer 130 to the above range, it may be prevented that the adhesion between the first coating layer 120 and the second coating layer 140 is not effectively improved due to low binder content, or the electrical conductivity of the positive electrode 100 is not effectively increased due to the content of the conductive material being lowered.

In addition, the patterned layer 130 may be applied without being particularly limited as long as it maximizes the surface area without covering the entire surface of the first coating layer 120. Specifically, the patterned layer 130 may have a dot, mesh, stripe or dendritric surface structure. As an example, the patterned layer 130 may have a dendritic surface structure.

In addition, the binder of the patterned layer 130 may have a form partially or completely penetrated into the gaps between the first positive electrode active materials constituting the first coating layer 120, and at the same time, a form partially or completely penetrated into the gaps between the second positive electrode active materials constituting the second coating layer 140.

In addition, the patterned layer 130 may occupy 30% to 80%, specifically, 30% to 70%; 30% to 60%; 30% to 50%; 40% to 70%; or 30% to 45% of the total area of the first coating layer 120. In the present invention, by controlling the area of the patterned layer 130 formed on the first coating layer 120 to the same range as described above, it is possible to prevent the mobility of lithium ions from decreasing and the battery performance from deteriorating while increasing the adhesive force between the first coating layer 120 and the second coating layer 140.

In addition, the average height of the patterned layer 130 may be 0.5 $\mu$m to 50 $\mu$m, specifically, 0.5 $\mu$m to 40 $\mu$m; 0.5 $\mu$m to 20 $\mu$m; 0.5 $\mu$m to 10 $\mu$m; 1 $\mu$m to 40 $\mu$m; 5 $\mu$m to 30 $\mu$m; 5 $\mu$m to 20 $\mu$m; 15 $\mu$m to 25 $\mu$m; 5 $\mu$m to 15 $\mu$m; 10 $\mu$m to 20 $\mu$m; 3 $\mu$m to 17 $\mu$m; or 1 $\mu$m to 10 $\mu$m, based on the cross-section. The patterned layer 130 according to the present invention may have a semicircular cross-sectional structure when the shape is a dot shape, and may have the shape close to a triangular pyramid when it is a dendritic shape, so that the "average height of the patterned layer" used in the invention may mean one-half of the highest height based on the cross-section structure of patterned layer 130. In the present invention, by adjusting the average height of the patterned layer 130 as described above, the specific surface area of the patterned layer 130 may be maximized, thereby improving the adhesion between the first coating layer 120 and the second coating layer 140.

Meanwhile, the first coating layer 120 is formed on one or both surfaces of the current collector 110, and includes a first positive electrode active material, a first conductive material, and a first binder. At this time, the first positive electrode active material may include a lithium iron phosphate compound represented by the following Chemical Formula 1:

[Chemical Formula 1]          $Li_{1+a}Fe_{1-b}M^1_b(PO_{4-c})X_c$

wherein,

$M^1$ is at least one selected from Al, Mg and Ti,
X is at least one selected from F, S and N, and
a, b and c are $-0.5 \leq a \leq +0.5$, $0 \leq b \leq 0.5$, $0 \leq c \leq 0.1$, respectively.

Specifically, the first positive electrode active material is a lithium iron phosphate compound represented by Chemical Formula 1 and may include at least one compound selected from the group consisting of $LiFePO_4$, $Li(Fe,Al)PO_4$, $Li(Fe,Mg)PO_4$ and $Li(Fe,Ti)PO_4$, and more specifically, $LiFePO_4$ may be used.

The lithium iron phosphate compound represented by Chemical Formula 1 may have an olivine structure. Lithium iron phosphate having an olivine structure shrinks in volume as lithium escapes at or above an overcharge voltage of about 4.5 V or more, as a result, the conductive path of the first coating layer is quickly blocked to allow the first coating layer to act as an insulating layer, thereby increasing the resistance of the first coating layer, and blocking the charging current to reach the overcharge termination voltage.

In addition, the first coating layer 120 may include at least one selected from the group consisting of natural graphite, artificial graphite, carbon black, acetylene black, ketjen black, and carbon fiber as the first conductive material. For example, the first conductive material may include acetylene black.

In addition, the first binder may include at least one resin selected from the group consisting of a polyvinylidene fluoride-hexafluoropropylene copolymer (PVDF-co-HFP), polyvinylidene fluoride, polyacrylonitrile, polymethyl methacrylate and copolymers thereof. As an example, the first binder may include polyvinylidene fluoride.

In addition, the first coating layer 120 may include 80 to 98 parts by weight of the first positive electrode active material, 1 to 10 parts by weight of the first conductive material, and 1 to 10 parts by weight of the first binder, based on a total of 100 parts by weight. As an example, the first coating layer 120 may include 84 to 96 parts by weight of the first positive electrode active material, 2 to 8 parts by weight of the first conductive material, and 2 to 8 parts by weight of the first binder, based on a total of 100 parts by weight, and as another example, may include 88 to 96 parts by weight of the first positive electrode active material, 2 to 6 parts by weight of the first conductive material, and 2 to 6 parts by weight of the first binder, based on a total of 100 parts by weight.

In addition, the average thickness of the first coating layer 120 may be 0.1 $\mu$m to 10 $\mu$m, specifically, 2 $\mu$m to 10 $\mu$m; 4 $\mu$m to 10 $\mu$m; or 5 $\mu$m to 9 $\mu$m.

Furthermore, the second coating layer 140 is formed on the first coating layer 120 on which the patterned layer 130 is formed, and includes a second positive electrode active material, a second conductive material, and a second binder. At this time, the second positive electrode active material may include a lithium metal composite oxide represented by the following Chemical Formula (2):

$$[\text{Chemical Formula 2}] \qquad LiCo_{1-q}M^2_qO_2$$

wherein,

$M^2$ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
q is $0 \leq q \leq 0.4$.

The second positive electrode active material may be applied without particular limitation as long as it is a lithium metal composite oxide represented by Chemical Formula 2. Specifically, the second positive electrode active material may include one or more compounds selected for the group consisting of $LiCoO_2$, $LiCo_{0.5}Zn_{0.5}O_2$, $LiCo_{0.7}Zn_{0.3}O_2$, $LiNi_{0.5}Co_{0.5}O_2$, $LiCo_{0.6}Fe_{0.4}O_2$, $LiCo_{0.9}Fe_{0.1}O_2$, $LiCo_{0.8}Al_{0.2}O_2$, $LiCo_{0.8}Mn_{0.2}O_2$, $LiCo_{0.9}Mn_{0.1}O_2$, and $LiCo_{0.8}Mn_{0.1}Al_{0.1}O_2$.

As an example, the positive electrode active material may include $LiCoO_2$ or $LiCo_{0.7}Zn_{0.3}O_2$ as the lithium nickel cobalt oxide represented by Chemical Formula 2, which may be used alone or in combination.

In addition, the second coating layer 140 may include at least one selected from the group consisting of natural graphite, artificial graphite, carbon black, acetylene black, ketjen black, and carbon fiber as the second conductive material. For example, the first conductive material may include acetylene black.

In addition, the binder may include at least one resin selected from the group consisting of a polyvinylidene fluoride-hexafluoropropylene copolymer (PVDF-co-HFP), polyvinylidene fluoride, polyacrylonitrile, polymethyl methacrylate and copolymers thereof. As an example, the second binder may include polyvinylidene fluoride.

In addition, the second coating layer 140 may include 80 to 98 parts by weight of the second positive electrode active material, 1 to 10 parts by weight of the second conductive material, and 1 to 10 parts by weight of the second binder, based on a total of 100 parts by weight. As an example, the second coating layer 140 may include 84 to 96 parts by weight of the second positive electrode active material, 2 to 8 parts by weight of the second conductive material, and 2 to 8 parts by weight of the second binder, based on a total of 100 parts by weight, and as another example, may include 88 to 96 parts by weight of the second positive electrode active material, 2 to 6 parts by weight of the second conductive material, and 2 to 6 parts by weight of the second binder, based on a total of 100 parts by weight.

Furthermore, the average thickness of the second coating layer 140 is not particularly limited, but may be specifically 50 $\mu$m to 300 $\mu$m, more specifically 100 $\mu$m to 200 $\mu$m; 80 $\mu$m to 150 $\mu$m; 120 $\mu$m to 170 $\mu$m; 150 $\mu$m to 300 $\mu$m; 200 $\mu$m to 300 $\mu$m; or 150 $\mu$m to 190 $\mu$m.

In addition, the second coating layer 140 may satisfy Equation 1:

[Equation 1]

$$6 \leq SD/PD \leq 100$$

In Equation 1, SD represents the average thickness of the second coating layer 140, and PD represents the average thickness of the patterned layer 130.

Equation 1 represents the ratio (SD/PD) of the average thickness (SD) of the second coating layer 140 to the average thickness (PD) of the patterned layer 130, and in Equation 1 of the present invention, 6 to 100, specifically 6 to 80; 10 to 60; 10 to 40; 10 to 30; 10 to 20; 20 to 70; 30 to 60; 15 to 35; 11 to 13; or 10 to 15 may be satisfied. The present invention improves the adhesion of the first coating layer 120 and the second coating layer 140 by adjusting the average thickness ratio of the second coating layer 140 and the patterned layer 130 to the above range, so that the occurrence of interlayer cracks may be improved.

Meanwhile, in the positive electrode 100 for a lithium secondary battery according to the present invention, a current collector 110 having high conductivity without causing a chemical change in the battery may be used. For example, stainless steel, aluminum, nickel, titanium, calcined carbon, etc. may be used, and in the case of aluminum or stainless steel, a surface treated with carbon, nickel, titanium, silver, or the like may be used. In addition, the current collector 110 may have fine irregularities on the surface to increase the adhesion of the positive electrode active material, and various forms such as a film, a sheet, a foil, a net, a porous body, a foam, and a nonwoven body are possible. In addition, the average thickness of the current collector 110 may be appropriately applied in a range of 3 to 500 $\mu$m in consideration of the conductivity and total thickness of the positive electrode 100 to be manufactured.

The positive electrode 100 for a lithium secondary battery according to the present invention sequentially includes a first coating layer 120 and a second coating layer 140 on the current collector 110 as described above, and by introducing a patterned layer 130 in a form in which the conductive material is dispersed in the binder between the first coating layer 120 and the second coating layer 140 at a specific area ratio, the safety of the battery is improved, and therefore, when a metal body penetrates the electrode from the outside, not only heat generation due to an overcurrent, ignition, and the like may not occur, but also the adhesive force between layers constituting the positive electrode 100 may be improved, so that the life characteristics of the batteries can be improved.

## Lithium Secondary Battery

In addition, in one embodiment, the present invention provides a lithium secondary battery including the positive electrode according to the present invention described above; a negative electrode; and a separation membrane positioned between the positive electrode and the negative electrode.

The lithium secondary battery according to the present invention may include the positive electrode of the present invention as described above and a negative electrode, and have a structure in which the positive electrode and the negative electrode are impregnated with a lithium salt-containing electrolyte.

Here, the negative electrode is manufactured by coating, drying and pressing the negative electrode active material on the negative electrode current collector, and if necessary, the conductive material, organic binder polymer, filler, etc. as described above may be optionally further included.

In addition, as the negative electrode active material.: for example, graphite having a completely layered crystal structure such as natural graphite, and soft carbon having a low crystallinity layered crystal structure (graphene structure; a structure in which hexagonal honeycomb planes of carbon are arranged in layers) and graphite materials such as hard carbon, artificial graphite, expanded graphite, carbon fiber, non-graphitizable carbon, carbon black, carbon nanotubes, fullerene, activated carbon, etc. in which carbon and these structures are mixed with amorphous parts; metal composite oxides such as $Li_xFe_2O_3(0 \leq x \leq 1)$, $Li_xWO_2(0 \leq x \leq 1)$, $Sn_xMe_{1-x}Me'_yO_z$ (Me: Mn, Fe, Pb, Ge; Me', Al, B, P, Si, Group 1 of the periodic table, Group 2 and Group 3 elements and halogens; $0 < x \leq 1$; $1 \leq y \leq 3$; $1 \leq z \leq 8$); lithium metal; lithium alloys; silicon-based alloys; tin-based alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymers such as polyacetylene; Li-Co-Ni-based materials; titanium oxide; lithium titanium oxide and the like, may be used.

As an example, the negative electrode active material may include both graphite and silicon (Si)-containing particles, and the graphite includes at least one of natural graphite having a layered crystal structure and artificial graphite having an isotropic structure, and the silicon (Si)-containing particles may include particles mainly containing silicon (Si) as a metal component, such as silicon (Si) particles, silicon oxide ($SiO_2$) particles, or a mixture of the silicon (Si) particles and the silicon oxide ($SiO_2$) particles.

In this case, the negative active material may include 80 to 95 parts by weight of graphite; and 1 to 20 parts by weight of silicon (Si)-containing particles, based on a total of 100 parts by weight. The present invention may improve the charge capacity per unit mass while reducing lithium consumption and irreversible capacity loss during initial charging/discharging of the battery by adjusting the content of graphite and silicon (Si)-containing particles contained in the negative electrode active material to the above range.

In addition, the negative electrode composite layer may have an average thickness of 100 $\mu$m to 200 $\mu$m, specifically, 100 $\mu$m to 180 $\mu$m, 100 $\mu$m to 150 $\mu$m, 120 $\mu$m to 200 $\mu$m, 140 $\mu$m to 200 $\mu$m, or 140 $\mu$m to 160 $\mu$m.

In addition, the negative electrode current collector is not particularly limited as long as it has high conductivity without causing a chemical change in the battery, and for example, copper, stainless steel, nickel, titanium, calcined carbon, etc. may be used, and in the case of copper or stainless steel, a surface treated with carbon, nickel, titanium, silver, etc. may be used. In addition, the negative electrode current collector, like the positive electrode current collector, may have fine irregularities on the surface to strengthen the bonding force with the negative electrode active material, and various forms such as films, sheets, foils, nets, porous materials, foams, non-woven materials, etc. are possible. In addition, the average thickness of the negative electrode current collector may be appropriately applied in a range of 3 to 500 $\mu$m in consideration of the conductivity and total thickness of the negative electrode to be manufactured.

In addition, the separation membrane is interposed between the negative electrode and the positive electrode, and an insulating thin film having high ion permeability and mechanical strength is used. The separation membrane is not particularly limited as long as it is conventionally used in the art, but specifically, chemically resistant and hydrophobic polypropylene; glass fiber; a sheet or nonwoven fabric made of polyethylene or the like may be used, and in some cases, a composite separation membrane in which inorganic particles/organic particles are coated with an organic binder polymer on a porous polymer substrate such as a sheet or nonwoven fabric may be used. When a solid electrolyte such as a polymer is used as the electrolyte, the solid electrolyte may also serve as a separation membrane. In addition, the separation membrane may have an average pore diameter of 0.01 to 10 $\mu$m, and an average thickness of 5 to 300 $\mu$m.

Meanwhile, the positive electrode and the negative electrode may be wound in the form of a jelly roll and stored in a cylindrical battery, a prismatic battery, or a pouch-type battery, or may be stored in a pouch-type battery in a folding or stack-and-folding form, but is not limited thereto.

In addition, the lithium salt-containing electrolyte according to the present invention may consist of an electrolyte and a lithium salt, and as the electrolyte, a non-aqueous organic solvent, an organic solid electrolyte, an inorganic solid electrolyte, and the like may be used.

As the non-aqueous organic solvent, for example, an aprotic organic solvent such as N-methyl-2-pyrrolidinone, ethylene carbonate, propylene carbonate, butylene carbonate, dimethyl carbonate, diethyl carbonate, gamma-butyrolactone, 1,2-dimethoxyethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, propionic methyl or propionic ethyl, may be used.

As the organic solid electrolyte, for example, polyethylene derivatives, polyethylene oxide derivatives, polypropylene oxide derivatives, phosphoric acid ester polymers, poly agitation lysine, polyester sulfide, polyvinyl alcohol, polyvinylidene fluoride, a polymeric material including an ionic dissociating group and the like may be used.

As the inorganic solid electrolyte, nitrides, halides, sulfates and the like of Li, such as $Li_3N$, LiI, $Li_5Ni_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, etc. may be used.

The lithium salt is a material easily soluble in the non-aqueous electrolyte, and for example, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloro lithium borane, lithium lower aliphatic carboxylates, lithium 4-phenylboronate, imide and the like may be used.

In addition, for the purpose of improving charging/discharging characteristics, flame retardancy, etc. in the electrolyte, for example, pyridine, triethylphosphite, triethanolamine, cyclic ether, ethylene diamine, n-glyme, hexaphosphate triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride and the like may be added. In some cases, in order to impart incombustibility, a halogen-containing solvent such as carbon tetrachloride and ethylene trifluoride may be further included, and carbon dioxide gas may be further included to improve high temperature storage characteristics, and fluoro-ethylene carbonate (FEC), propene sultone (PRS), etc. may be further included.

**Battery Module**

Further, in one embodiment, the present invention provides a battery module including the above-described secondary battery as a unit cell, and provides a battery pack including the battery module.

The battery pack may be used as a power source for a medium or large device that requires high temperature stability, long cycle characteristics, and high rate characteristics, and specific examples of the medium or large device include a power tool that moves by being powered by an omniscient motor; electric vehicles including electric vehicles (EVs), hybrid electric vehicles (HEVs), plug-in hybrid electric vehicles (PHEVs), and the like; electric two-wheeled vehicles including electric bicycles (E-bikes) and electric scooters (E-scooter); electric golf carts; and a system for storing power, and more specifically, a hybrid electric vehicle (HEV), but is not limited thereto.

Hereinafter, the present invention will be described in detail by way of Examples.

However, the following Examples and Experimental Examples are merely illustrative of the present invention, and the content of the present invention is not limited to the following Examples and Experimental Examples.

**Examples 1-3 and Comparative Examples 1-4: Manufacture of Positive Electrode for Lithium Secondary Battery**

88 parts by weight of $LiFePO_4$ as a first positive electrode active material, 10 parts by weight of PVdF as a binder, and 2 parts by weight of carbon black as a conductive material were weighed and mixed in an N-methylpyrrolidone (NMP) solvent to prepare a slurry for a first coating layer.

Separately, 95 parts by weight of $LiCoO_2$ as a second positive electrode active material, 2 parts by weight of PVdF as a binder, and 3 parts by weight of carbon black as a conductive material were weighed and mixed in an N-methylpyrrolidone (NMP) solvent to prepare a slurry for a second coating layer.

The slurry for the first coating layer was applied to an aluminum foil, dried and rolled to form a first coating layer (average thickness: 8 $\mu$m), and then PVdF containing 20 wt% of carbon black was patterned on the first coating layer to form a patterned layer having a mesh-like surface structure. Then, the slurry for the second coating layer was applied, dried and rolled to manufacture a positive electrode for a lithium secondary battery. At this time, the area ratio with respect to the first coating layer and average thickness of the patterned layer and the average thickness of the patterned layer (PD) and the second coating layer (SD) are shown in Table 1 below.

[Table 1]

|  | Patterned layer | | SD/PD |
|---|---|---|---|
|  | Area ratio | Average thickness |  |
| Example 1 | 35% | 10 $\mu$m | 12 |
| Example 2 | 50% | 10 $\mu$m | 12 |
| Example 3 | 35% | 5 $\mu$m | 40 |
| Comparative Example 1 | 25% | 10 $\mu$m | 12 |
| Comparative Example 2 | 100% | 10 $\mu$m | 12 |
| Comparative Example 3 | 35% | 5 $\mu$m | 5 |
| Comparative Example 4 | 35% | 10 $\mu$m | 150 |

**Experimental Example**

In order to evaluate the performance of the positive electrode for a lithium secondary battery according to the present invention, the following experiment was performed.

A) Evaluation of Interlayer Adhesion

The positive electrodes manufactured in Examples and Comparative Examples were cut so that the horizontal and vertical lengths were 25 mm and 70 mm, respectively, and lamination was performed at 70 °C and 4 MPa using a press to prepare a specimen. The prepared specimen was attached to a glass plate using double-sided tape and fixed, and at this time, the current collector was placed to face the glass plate. Using a tensile tester, the second coating layer of the specimen was peeled at an angle of 90° at 25 °C at a speed of 100 mm/min, the peel force at this time was measured in real time and the average value was defined as the interfacial adhesive force between the first and second coating layers. The results are shown in Table 2 below.

[Table 2]

|  | Interlayer adhesion [N/m] |
|---|---|
| Example 1 | 360 |
| Example 2 | 390 |

(continued)

|  | Interlayer adhesion [N/m] |
|---|---|
| Example 3 | 320 |
| Comparative Example 1 | 281 |
| Comparative Example 2 | 507 |
| Comparative Example 3 | 423 |
| Comparative Example 4 | 224 |

As shown in Table 2, in the positive electrode for a lithium secondary battery according to the present invention, it was confirmed that each layer constituting the positive electrode had a high interfacial adhesion of 300 N/m or more. This means that the interfacial adhesion of each layer constituting the positive electrode of the Example is excellent, so that the occurrence of cracks is alleviated.

B) Nail Penetration Test

A lithium secondary battery was manufactured using each positive electrode manufactured in Examples and Comparative Examples. Specifically, natural graphite as a negative electrode active material, a carbon black conductive material, and a PVDF binder were mixed in an N-methylpyrrolidone solvent in a weight ratio of 85:10:5 to prepare a slurry for forming a negative electrode, and this was applied to a copper foil to manufacture a negative electrode. An electrode assembly was manufactured by laminating a separation membrane (thickness: about 16 $\mu$m) made of a porous polyethylene (PE) film between each positive electrode manufactured in Examples and Comparative Examples and the negative electrode manufactured above. After the manufactured electrode assembly was placed inside the battery case, an electrolyte was injected into the case to manufacture a lithium secondary battery. At this time, the electrolyte was prepared by dissolving lithium hexafluorophosphate ($LiPF_6$) at a concentration of 1.0M in an organic solvent consisting of ethylene carbonate/dimethyl carbonate/ethylmethyl carbonate (the mixing volume ratio of EC/DMC/EMC is 3/4/3).

For the manufactured lithium secondary battery, it was evaluated whether ignition occurred when a metal body with a diameter of 3 mm was dropped at a speed of 80 mm/sec and penetrated the cell in the same manner as the PV8450 certification conditions, and the results are shown in Table 3 below.

[Table 3]

|  | Ignition or not (Pass/Test) |
|---|---|
| Example 1 | 6P/6T |
| Example 2 | 6P/6T |
| Example 3 | 6P/6T |
| Comparative Example 1 | 4P/6T |
| Comparative Example 2 | 4P/6T |
| Comparative Example 3 | 3P/6T |
| Comparative Example 4 | 2P/6T |

Referring to Table 3, it was confirmed that, in the positive electrode for a lithium secondary battery according to the present invention, heat is not generated or ignition does not occur when a metal object such as a nail penetrates the electrode from the outside. From these results, it can be seen that the positive electrode for a lithium secondary battery according to the present invention improves the safety of the battery by implementing high penetration resistance when penetrated by nails.

C) Evaluation of Cycle Life Performance

In the same manner as in the nail penetration test, a lithium secondary battery was manufactured using each of the positive electrodes manufactured in Examples and Comparative Examples. For each manufactured lithium secondary battery, capacity retention (%) was measured while performing 100 charge-discharge cycles (n=100) and 200 charging/discharging cycles (n=200) under the conditions of a charge termination voltage of 4.25 V, a discharge termination voltage of 2.5 V and 0.5 C/0.5 C at 25 °C. At this time, the capacity retention was calculated using Equation 2 below, and the results are shown in Table 4 below:

Capacity retention (%) = (discharge capacity at $n^{th}$ charging/discharging cycle/discharge capacity at initial charging/discharging cycle)$\times$100 [Equation 2]

[Table 4]

| | Capacity retention [%] at 100th (n=100) charging/discharging cycle | Capacity retention [%] at 200th (n=200) charging/discharging cycle |
|---|---|---|
| Example 1 | 98.3 | 95.3 |
| Example 2 | 98.7 | 96.0 |
| Example 3 | 97.1 | 95.7 |
| Comparative Example 1 | 96.8 | 92.1 |
| Comparative Example 2 | 92.2 | 81.5 |
| Comparative Example 3 | 91.0 | 84.8 |
| Comparative Example 4 | 95.8 | 91.3 |

As shown in Table 4, it can be seen that the positive electrode of the Examples manufactured according to the present invention has an effect of improving the electrical performance of the battery.

Specifically, it was found that the lithium secondary battery having the positive electrode manufactured in Examples had a high capacity retention of 95% or more even when performing 100 cycles of charging/discharging as well as 200 cycles of charging/discharging.

From these results, the positive electrode for a lithium secondary battery according to the present invention sequentially includes a first coating layer and a second coating layer on a current collector, and by introducing a patterned layer in a form in which the conductive material is dispersed in the binder between the first coating layer and the second coating layer at a specific area ratio, the safety of the battery is improved, and therefore, when a metal body penetrates the electrode from the outside, not only heat generation due to an overcurrent, ignition, and the like may not occur, but also the adhesive force between layers constituting the positive electrode may be improved, so that the life characteristics of the batteries may be improved.

[Description of Marks in the Figures]

100: Positive electrode for lithium secondary battery
110: current collector
120: first coating layer
130: patterned layer
140: second coating layer

**Claims**

1. A positive electrode for a lithium secondary battery comprising:

a current collector;
a first coating layer disposed on one or both surfaces of the current collector and containing a first positive electrode active material;
a patterned layer disposed on the first coating layer and having a binder and a conductive material dispersed in the binder; and
a second coating layer disposed on the first coating layer on which the patterned layer is disposed, and containing a second positive electrode active material,
wherein an area of the first coating layer on which the patterned layer is disposed is 30% to 80% of a total area of the first coating layer.

2. The positive electrode for the lithium secondary battery according to claim 1, wherein the patterned layer has a dot, mesh, stripe or dendritric surface structure.

3. The positive electrode for the lithium secondary battery according to claim 1, wherein the first coating layer and the second coating layer each comprises 1 to 10 parts by weight of a binder based on 100 parts by weight of the first coating layer and the second coating layer, respectively, and
the binder in each coating layer comprises one or more resins selected from the group consisting of a polyvinylidene fluoride-hexafluoropropylene copolymer (PVDF-co-HFP), polyvinylidene fluoride, polyacrylonitrile, polymethyl methacrylate and copolymers thereof.

4. The positive electrode for the lithium secondary battery according to claim 1, wherein the binder in the patterned layer comprises one or more resins selected from the group consisting of a polyvinylidene fluoride-hexafluoropropylene copolymer (PVDF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluororubber, and copolymers thereof.

5. The positive electrode for the lithium secondary battery according to claim 1, wherein the conductive material in the patterned layer comprises one or more selected from the group consisting of graphite including natural graphite or artificial graphite; carbon black including acetylene black, ketjen black, channel black, furnace black, lamp black, or thermal black; conductive fibers including carbon fibers or metal fibers; carbon nanotubes; metal powders including fluorocarbon, aluminum or nickel; zinc oxide; potassium titanate; titanium oxide; and polyphenylene derivatives.

6. The positive electrode for the lithium secondary battery according to claim 1, wherein an amount of the conductive material in the patterned layer is 1 to 50 parts by weight based on 100 parts by weight of the binder.

7. The positive electrode for the lithium secondary battery according to claim 1, wherein an average height of the patterned layer is 0.5 $\mu$m to 50 $\mu$m based on the cross-section.

8. The positive electrode for the lithium secondary battery according to claim 1, wherein an average thickness of the first coating layer is 0.1 $\mu$m to 10 $\mu$m.

9. The positive electrode for the lithium secondary battery according to claim 1, wherein the second coating layer satisfies Equation 1:

$$[\text{Equation 1}]$$

$$6 \leq SD/PD \leq 100$$

Wherein Equation 1,

SD represents an average thickness of the second coating layer, and
PD represents an average thickness of the patterned layer.

10. The positive electrode for the lithium secondary battery according to claim 1, wherein the first positive electrode active material comprises a lithium iron phosphate compound represented by Chemical Formula 1 below:

$$[\text{Chemical Formula 1}] \qquad Ei_{1+a}Fe_{1-b}M^1{}_b(PO_{4-c})X_c$$

Wherein, in Chemical Formula 1,

$M^1$ is one or more selected from the group consisting of Al, Mg and Ti,
X is one or more selected from the group consisting of F, S and N, and

a, b and c are -0.5≤a≤+0.5, 0≤b≤0.5, 0≤c≤0.1, respectively.

11. The positive electrode for the lithium secondary battery according to claim 1, wherein the second positive electrode active material comprises a lithium metal composite oxide represented by Chemical Formula 2 below:

$$[\text{Chemical Formula 2}] \qquad LiCo_{1-q}M^2_qO_2$$

wherein, in Chemical Formula 2,

$M^2$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
q is 0≤q≤0.4.

12. A lithium secondary battery comprising the positive electrode for the lithium secondary battery according to claim 1.


**Patentansprüche**

1. Positive Elektrode für eine Lithium-Sekundärbatterie, umfassend:

einen Stromsammler;
eine erste Beschichtungsschicht, welche an einer oder beiden Oberflächen des Stromsammlers angeordnet ist und ein erstes aktives positives Elektrodenmaterial umfasst;
eine gemusterte Schicht, welche an der ersten Beschichtungsschicht angeordnet ist und ein Bindemittel und ein leitfähiges Material aufweist, welches in dem Bindemittel dispergiert ist; und
eine zweite Beschichtungsschicht, welche an der ersten Beschichtungsschicht angeordnet ist, an welcher die gemusterte Schicht angeordnet ist, und ein zweites aktives positives Elektrodenmaterial umfasst,
wobei eine Fläche der ersten Beschichtungsschicht, an welcher die gemusterte Schicht angeordnet ist, 30% bis 80% einer Gesamtfläche der ersten Beschichtungsschicht beträgt.

2. Positive Elektrode für die Lithium-Sekundärbatterie nach Anspruch 1, wobei die gemusterte Schicht eine Punkt-, Netz, Streifen oder dendritische Oberflächenstruktur aufweist.

3. Positive Elektrode für die Lithium-Sekundärbatterie nach Anspruch 1, wobei die erste Beschichtungsschicht und die zweite Beschichtungsschicht jeweils 1 bis 10 Gewichtsteile eines Bindemittels basierend auf 100 Gewichtsteilen der ersten Beschichtungsschicht bzw. der zweiten Beschichtungsschicht umfassen, und das Bindemittel in jeder Beschichtungsschicht ein oder mehrere Harze umfasst, ausgewählt aus der Gruppe, bestehend aus einem Polyvinyliden-Fluorid-Hexafluoropropylen-Copolymer (PVDF-co-HFP), Polyvinylidenfluorid, Polyacrylonitril, Polymethylmethacrylat und Copolymere davon.

4. Positive Elektrode für die Lithium-Sekundärbatterie nach Anspruch 1, wobei das Bindemittel in der gemusterten Schicht ein oder mehrere Harze umfasst, ausgewählt aus der Gruppe, bestehend aus einem Polyvinyliden-Fluorid-Hexafluoropropylen-Copolymer (PVDF-co-HFP), Polyvinylidenfluorid, Polyacrylonitril, Polymethylmethacrylat, Polyvinylalkohol, Carboxylmethyl-Zellulose (CMC), Stärke, Hydroxypropyl-Zellulose, regenerierter Zellulose, Polyvinylpyrrolidon, Tetrafluoroethylen, Polyethylen, Polypropylen, Polyacrylsäure, einem Etyhylen-Propylen-Dien-Monomer (EPDM), einem sulfonierten EPDM, Styren-Butadien-Gummi (SBR), Fluorgummi und Copolymeren davon.

5. Positive Elektrode für die Lithium-Sekundärbatterie nach Anspruch 1, wobei das leitfähige Material in der gemusterten Schicht eines oder mehrere umfasst, ausgewählt aus der Gruppe, bestehend aus Graphit, einschließlich natürlichem oder künstlichem Graphit; Kohleschwarz, einschließlich Acetylenschwarz, Ketjen-Schwarz, Kanalschwarz, Ofenschwarz, Lampenschwarz oder thermisches Schwarz; leitfähigen Fasern, einschließlich Kohlestofffasern oder Metallfasern; Kohlenstoff-Nanoröhren; Metallpulvern, einschließlich Fluor-Kohlenstoff, Aluminium oder Nickel; Zinkoxid; Kaliumoxid; Titanoxid und Polypropylen-Derivate.

6. Positive Elektrode für die Lithium-Sekundärbatterie nach Anspruch 1, wobei eine Menge des leitfähigen Materials in der gemusterten Schicht 1 bis 50 Gewichtsteile basierend auf 100 Gewichtsteilen des Bindemittels beträgt.

7. Positive Elektrode für die Lithium-Sekundärbatterie nach Anspruch 1, wobei eine durchschnittliche Höhe der ge-

musterten Schicht 0,5 μm bis 50 μm basierend auf dem Querschnitt beträgt.

8. Positive Elektrode für die Lithium-Sekundärbatterie nach Anspruch 1, wobei eine durchschnittliche Dicke der ersten Beschichtungsschicht 0,1 μm bis 10 μm beträgt.

9. Positive Elektrode für die Lithium-Sekundärbatterie nach Anspruch 1, wobei die zweite Beschichtungsschicht Gleichung 1 erfüllt:

[Gleichung 1]

$$6 \leq SD/PD \leq 100,$$

wobei in Gleichung 1,

SD eine durchschnittliche Dicke der zweiten Beschichtungsschicht repräsentiert, und
PD eine durchschnittliche Dicke der gemusterten Schicht repräsentiert.

10. Positive Elektrode für die Lithium-Sekundärbatterie nach Anspruch 1, wobei das erste aktive positive Elektrodenmaterial eine Lithium-Eisen-Phosphat-Mischung umfasst, welche durch die chemische Formel 1 unten repräsentiert wird:

[Chemische Formel 1]     $Li_{1+a}Fe_{1-b}M^1_b(PO_{4-c})X_c,$

wobei in der chemischen Formel 1,

$M^1$ eines oder mehrere ist, ausgewählt aus der Gruppe, bestehend aus Al, Mg und Ti,
X eines oder mehrere ist, ausgewählt aus der Gruppe, bestehend aus F, S und N, und
a, b und c -0,5≤a≤+0,5, 0≤b≤0,5 bzw. 0≤c≤0,1 sind.

11. Positive Elektrode für die Lithium-Sekundärbatterie nach Anspruch 1, wobei das zweite aktive positive Elektrodenmaterial ein Lithium-Metallmischoxid umfasst, welches durch die chemische Formel 2 unten repräsentiert wird:

[Chemische Formel 2]     $LiCo_{1-q}M^2_qO_2,$

wobei in der chemischen Formel 2,

$M^2$ ein oder mehrere Elemente ist, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und
q 0≤q≤0,4 beträgt.

12. Lithium-Sekundärbatterie, umfassend die positive Elektrode für die Lithium-Sekundärbatterie nach Anspruch 1.


**Revendications**

1. Électrode positive pour une batterie secondaire au lithium comprenant :

un collecteur de courant ;
une première couche de revêtement disposée sur une ou les deux surfaces du collecteur de courant et contenant un premier matériau actif d'électrode positive ;
une couche à motifs disposée sur la première couche de revêtement et ayant un liant et un matériau conducteur dispersé dans le liant ; et
une deuxième couche de revêtement disposée sur la première couche de revêtement sur laquelle la couche à motifs est disposée et contenant un deuxième matériau actif d'électrode positive,
dans laquelle une surface de la première couche de revêtement sur laquelle la couche à motifs est disposée représente 30 % à 80 % d'une surface totale de la première couche de revêtement.

2. Électrode positive pour la batterie secondaire au lithium selon la revendication 1, dans laquelle la couche à motifs présente une structure à points, à mailles, à rayures ou dendritique.

3. Électrode positive pour la batterie secondaire au lithium selon la revendication 1, dans laquelle la première couche de revêtement et la deuxième couche de revêtement comprennent chacune 1 à 10 parties en poids d'un liant sur la base de 100 parties en poids de la première couche de revêtement et de la deuxième couche de revêtement, respectivement, et

dans laquelle le liant dans chaque couche de revêtement comprend une ou plusieurs résines sélectionnées dans le groupe constitué d'un copolymère polyfluorure de vinylidène-hexafluoropropylène (PVDF-co-HFP), d'un polyfluorure de vinylidène, d'un polyacrylonitrile, d'un polyméthacrylate de méthyle et de copolymères de ceux-ci.

4. Électrode positive pour la batterie secondaire au lithium selon la revendication 1, dans laquelle le liant dans la couche à motifs comprend une ou plusieurs résines sélectionnées dans le groupe constitué d'un copolymère polyfluorure de vinylidène-hexafluoropropylène (PVDF-co-HFP), d'un polyfluorure de vinylidène, d'un polyacrylonitrile, d'un polyméthacrylate de méthyle, d'un alcool polyvinylique, d'une carboxyméthylcellulose (CMC), d'un amidon, d'une hydroxypropylcellulose, d'une cellulose régénérée, d'une polyvinylpyrrolidone, d'un tétrafluoroéthylène, d'un polyéthylène, d'un polypropylène, d'un acide polyacrylique, d'un monomère d'éthylène-propylène-diène (EPDM), d'un EPDM sulfoné, d'un caoutchouc styrène-butadiène (SBR), d'un caoutchouc fluoré et de copolymères de ceux-ci.

5. Électrode positive pour la batterie secondaire au lithium selon la revendication 1, dans laquelle le matériau conducteur dans la couche à motifs comprend un ou plusieurs éléments sélectionnés dans le groupe constitué d'un graphite comportant un graphite naturel ou un graphite artificiel ; un noir de carbone comportant un noir d'acétylène, un noir de Ketjen, un noir au tunnel, un noir de fourneau, un noir de fumée ou un noir thermique ; des fibres conductrices comportant des fibres de carbone ou des fibres métalliques ; des nanotubes de carbone ; des poudres métalliques comportant un fluorocarbone, de l'aluminium ou du nickel ; de l'oxyde de zinc ; du titanate de potassium ; de l'oxyde de titane ; et des dérivés de polyphénylène.

6. Électrode positive pour la batterie secondaire au lithium selon la revendication 1, dans laquelle une quantité du matériau conducteur dans la couche à motifs est de 1 à 50 parties en poids sur la base de 100 parties en poids du liant.

7. Électrode positive pour la batterie secondaire au lithium selon la revendication 1, dans laquelle une hauteur moyenne de la couche à motifs est de 0,5 $\mu$m à 50 $\mu$m sur la base de la section transversale.

8. Électrode positive pour la batterie secondaire au lithium selon la revendication 1, dans laquelle une épaisseur moyenne de la première couche de revêtement est de 0,1 $\mu$m à 10 $\mu$m.

9. Électrode positive pour la batterie secondaire au lithium selon la revendication 1, dans laquelle la deuxième couche de revêtement satisfait l'équation 1 :

$$[\text{Équation 1}]$$

$$6 \leq \text{SD/PD} \leq 100$$

dans laquelle, dans l'équation 1,

SD représente une épaisseur moyenne de la deuxième couche de revêtement, et
PD représente une épaisseur moyenne de la couche à motifs.

10. Électrode positive pour la batterie secondaire au lithium selon la revendication 1, dans laquelle le premier matériau actif d'électrode positive comprend un composé de phosphate de fer lithié représenté par la formule chimique 1 ci-dessous :

[Formule chimique 1]   $\text{Li}_{1+a}\text{Fe}_{1-b}\text{M}^1{}_b(\text{PO}_{4-c})\text{X}_c$

dans laquelle, dans la formule chimique 1,

M$^1$ est un ou plusieurs éléments sélectionnés dans le groupe constitué d'Al, Mg et Ti,
X est un ou plusieurs éléments sélectionnés dans le groupe constitué de F, S et N, et

a, b et c sont -0,5 ≤ a ≤ +0,5, 0 ≤ b ≤ 0,5, 0 ≤ c ≤ 0,1, respectivement.

11. Électrode positive pour la batterie secondaire au lithium selon la revendication 1, dans laquelle le deuxième matériau actif d'électrode positive comprend un oxyde composite de métal-lithium représenté par la formule chimique 2 ci-dessous :

[Formule chimique 2]    $LiCO_{1-q}M^2_qO_2$

dans laquelle, dans la formule chimique 2,

$M^2$ est un ou plusieurs éléments sélectionnés dans le groupe constitué de W, Cu, Fe, V, Cr, Ti, Zr, Zn, Al, In, Ta, Y, La, Sr, Ga, Sc, Gd, Sm, Ca, Ce, Nb, Mg, B et Mo, et
q est $0 \leq q \leq 0,4$.

12. Batterie secondaire au lithium comprenant l'électrode positive pour la batterie secondaire au lithium selon la revendication 1.

【FIG. 1】

100

140
130
120
110

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210043090

- KR 20190047203